Europäisches Patentamt

European Patent Office

Office européen des brevets

(19)

(11) Publication number: **0 077 686**
**B1**

(12) # EUROPEAN PATENT SPECIFICATION

(45) Date of publication of patent specification: **24.08.88**

(51) Int. Cl.⁴: **G 11 B 27/02**

(21) Application number: **82305558.7**

(22) Date of filing: **19.10.82**

(54) Video tape editing control systems.

(30) Priority: **20.10.81 JP 167667/81**

(43) Date of publication of application:
**27.04.83 Bulletin 83/17**

(45) Publication of the grant of the patent:
**24.08.88 Bulletin 88/34**

(84) Designated Contracting States:
**AT DE FR GB NL**

(56) References cited:
**US-A-3 721 757**
**US-A-4 272 790**

**SMPTE JOURNAL, vol. 88, no. 7, July 1979,
pages 486-490, Scarsdale, New York, USA; H.
FIX et al.: "Design criteria of video post
production systems with optimum operational
editing convenience"**

**FERNSEH- & KINO-TECHNIK, vol. 36, no. 5, May
1982, pages 171-177, Berlin, DE; R. HEDTKE et
al.: "Dezentrales Mikroprozessorsystem am
Beispiel eines Multikassettenautomaten"**

**INTERNATIONAL BROADCAST ENGINEER, vol.
12, no. 176, March 1981, pages 14-16, Eton,
Berks, GB; D. MACHON: "A complete recording
package"**

(73) Proprietor: **SONY CORPORATION
7-35 Kitashinagawa 6-Chome Shinagawa-ku
Tokyo 141 (JP)**

(72) Inventor: **Ishiguro, Mamoru
3-1-2-403 Tobio Atsugi-shi
Kanagawa-ken (JP)**
Inventor: **Enomoto, Mitsutaka
Pat. Div. Sony Corp. 7-35 Kitashinagawa-6
Shinagawa-ku Tokyo (JP)**

(74) Representative: **Thomas, Christopher Hugo
et al
D Young & Co 10 Staple Inn
London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to video tape editing control systems and more particularly to a system having the features of the preamble of claim 1.

A so-called off-line editing system such as disclosed in US—A—3 721 757 is utilized in the field of television broadcasting. In this system, because many recorded tapes are used, it is necessary for a reel number to be assigned to each tape and the reel numbers as well as editing information are recorded as data. Therefore, with this system, every time a new tape is installed in an editing video tape recorder (VTR) the editor has to input the new reel number utilizing ten keys. However, since the editor may be preoccupied with other operations, the inputting of the reel number is frequently forgotten. As a result, the wrong reel number is recorded as data and accordingly an incorrect scene is recorded on the tape upon an on-line edit.

According to the present invention there is provided an editing control system, comprising:

a record video tape recorder;

a plurality of play video tape recorders each using a video tape cassette;

editing control means for controlling said record and play video tape recorders, said editing control means having a memory means for storing editing data including at least a reel number corresponding to said cassette and the edit points used for editing;

each of said play video tape recorders having switch means for detecting insertion and ejection of a said cassette;

characterised by

said editing data stored in said memory means also including flag data representing insertion and ejection of a said cassette;

means for detecting an entry of said editing data;

means for manually changing said reel number;

means for detecting an absence of manual changing of said reel number; and

means for automatically changing said reel number in response to said flag data, a signal from said means for detecting an entry of said editing data and a signal from said means for detecting an absence of manual changing of said reel number.

Fernseh und Kino-Technik, Volume 36, No. 5, May 1982, pages 171 to 177 corresponds to a lecture delivered on 22 September 1981, and discloses an automatic editing control system comprising a record VTR and a plurality of play VTRs. Part of this system is a rack in which a number of cassettes can be stored outside the play VTRs. The insertion and ejection of video tape cassettes into and from any play VTR is done automatically, and each cassette is labelled with a label that can be read automatically. Control means controls the record and play VTRs and includes a plurality of registers for registering editing data including the cassette data as read from the label. This also overcomes the problem of recording the wrong reel number but in a different way.

The invention will now be described by way of example with reference to the accompanying drawings, throughout which like parts are referred to by like references, and in which:

Figure 1 is a block diagram of an embodiment of video tape editing control system according to the invention;

Figure 2 is a view used to explain the operation panel of the embodiment of Figure 1; and

Figure 3 is a flow chart used to explain the operation of the embodiment of Figure 1.

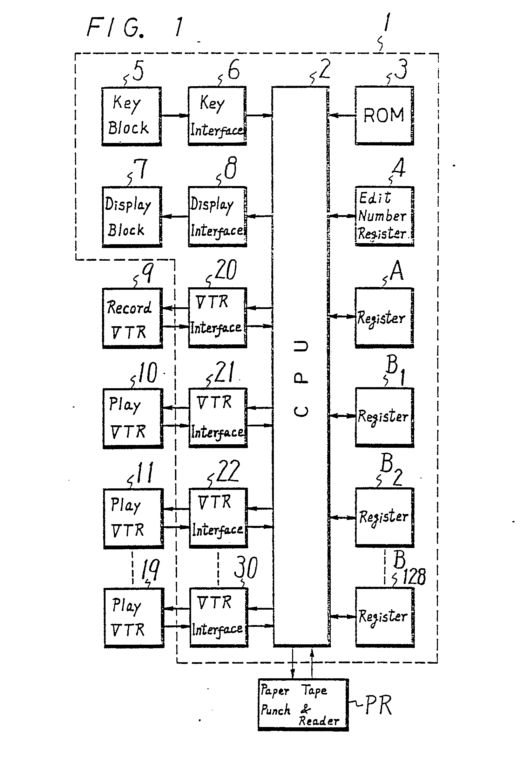

Referring to Figure 1, the editing control system comprises an editing control unit 1 which includes therein circuits necessary for the editing control, a central processing unit (CPU) 2, a read only memory (ROM) 3 which stores therein software used for controlling the CPU 2, and an edit number register 4 used to store which of registers $B_1 \ldots B_n$, serving as data areas corresponding to, for example, 128 events such as edit points or in/out points, accesses or is accessed to a register A used as a work area.

The registers $B_1$, $R_2$, $\ldots B_{128}$ can each store a reel number (usually one reel number, but in the case of A/B roll editing two reel numbers), the kind of editing mode (assemble editing mode or insert editing mode), the kind of source (for example, VTR or camera), an edit start point or in point and an edit end point or out point in each of play and record VTRs which relate to the editing, an edit start point or in point of an audio signal, etc. The contents of the registers $B_i$ (i = 1, 2, . . . , 128) are accessed as necessary by the register A serving as the work area, and are then used for the editing operation. In other words, the registers $B_i$ function as random access memories (RAMs) to read out data stored in a desired register and write data in the desired memory in response to a command by the CPU 2.

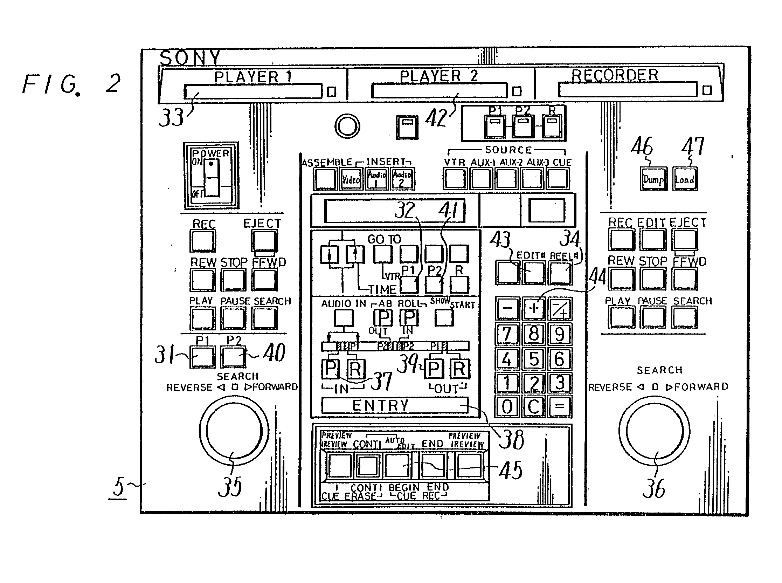

A key block 5 is used by the editor to generate a command to carry out various kinds of operations shown in Figure 2. The command by the key block 5 is transferred to the CPU 2 through a key interface 6 as a desired command. A display block 7 comprises a light emitting diode, numeral display tube, or other suitable display means to display information such as the reel number or the time code required for editing. To this end, the display signal is transmitted to the display block 7 from the CPU 2 through a display inferface 8.

The system also includes a record VTR 9 and play VTRs 10, 11, . . . 19. The VTRs 9 to 19 are respectively coupled to the CPU 2 through VTR interfaces 22 to 30. Each of the VTRs 9 to 19 may be of the kind which records and/or reproduces a signal using a video tape cassette, for example, the VTR type BVO-800 made by SONY CORPORATION can be used. Each of the VTRs 9 to 19 comprises a circuit (not shown) which will detect the insertion and ejection of a cassette, and the signals from this circuit are also supplied to CPU 2 through the VTR interfaces 21 to 30.

Finally, the system comprises a paper tape punch and reader PR for punching out editing data stored in the registers $B_1$ to $B_n$ and for responding to such punch paper tape to control the operation of the CPU 2.

Next, referring to Figure 2, a description will be given of the operation of the system in the case in which only two play VTRs are used.

First, when a P1 button 31 is depressed, the play VTR, for example, the play VTR 10 (Figure 1) is selected and the play VTR 10 may be operated by the keys shown on the left side of Figure 2. When a reel number relating to a tape cassette 10a loaded into the play VTR 10 is to be inputted, the following process is carried out. Firstly, a central P1 button 32 is depressed and thereafter ten keys are operated to input a predetermined number. This number is displayed on a display unit 33 for the play VTR 10. At this time, if a REEL # button 34 as well as the P1 button 32 are depressed, the reel number at this time is registered in one of the registers $B_1$ to $B_{128}$, for example, the register $B_1$. Next, either of ASSEMBLE and INSERT buttons for the editing mode change-over is depressed, and then search dials 35 and 36 are operated to operate the play and record VTRs 10 and 9 (Figure 1) thereby to search for an optimum IN-point and/ or OUT-point. In the case of an insert edit, the IN-point is first detemrined and when the VTR 10 has stopped, the address of the IN-point on the tape is displayed on the display unit 33 in the form of a time code. In this state, if a P-IN button 37 and an ENTRY button 38 are depressed at the same time, the time code at that time is registered in the register $B_1$. Next, when the OUT-point is determined, in the stop state of the VTR 10, the OUT-point address is similarly displayed on the display unit 33. IN this state, when a P-OUT button 39 and the ENTRY button 38 are depressed simultaneously, the time code of the OUT-point is registered in the register $B_1$. An SMPTE time code may be used as the time code.

After the desired IN/OUT points have been decided upon as described above, when a new tape cassette 10b is inserted into the VTR 10 for the next editing, by a similar operation the new reel number, editing mode, and IN/OUT points can be registered in the register $B_2$.

To obtain similar editing data on the other play VTR 11, if P2 buttons 40 and 41, the REEL # button 34, the P-IN button 37 and the P-OUT button 39 are operated similar to the foregoing manner, the data can be registered in another register, for example, the register $B_3$. A display unit 42 is provided for the play VTR 11.

As to the edit number register 4 (Figure 1), it is so formed that every time when an EDIT # button 43 and a "+" button 44 are depressed, the number thereof is incremented, and also when after deciding on respective edit points an AUTO EDIT button 45 is depressed to perform the editing, the number is also incremented. As a result, at each event a different register is selected.

Where a reel number is inputted by a manual operation, it is sufficient that the above operation is repeated to store all the data relating to the necessary number of events, and thereafter the data are supplied by pushing a DUMP button 46 to the paper tape punch and reader PR (Figure 1) thereby to provide a paper tape. The paper tape thus provided can be used as an input for another on-line editing operation. Moreover, with this editing control system, it is possible that after the play and record VTRs have been replaced by the VTRs for on-line editing, for example, the VTR type BVH-2000 made by SONY CORPORATION, a LOAD button 47 is pushed to input the data from the paper tape thereto to carry out the editing.

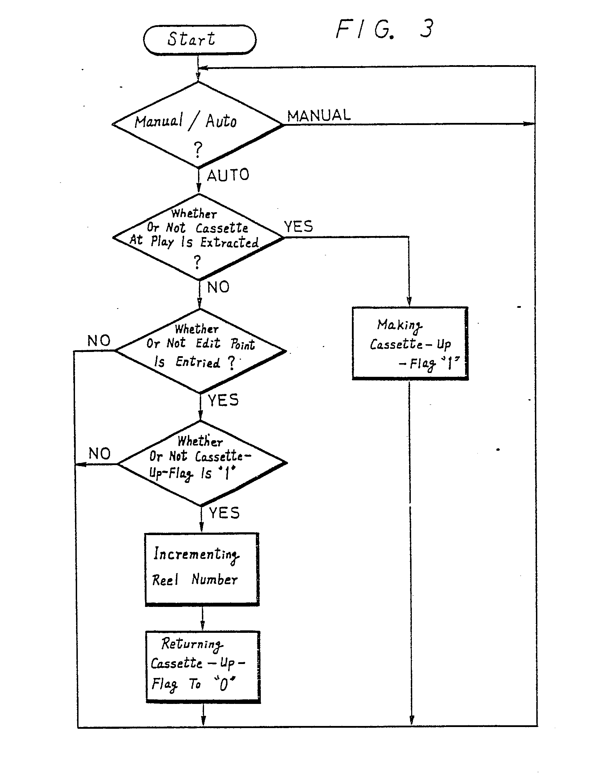

Now, the automatic reel number designation will be described with reference to the flow chart of Figure 3.

When the power is turned on and the tape cassettes are inserted into the play VTRs, the CPU 2 automatically designates a cassette of the VTR 10 as reel number 001 and a cassette of the VTR 11 as reel number 101. In this state, a detecting means detects whether or not the reel number is changed by the manual operation of the editor, thus it is judged whether or not there is such manual operation. This judgement is carried out by memorizing that the above-mentioned REEL # button 34 together with the P1 button 32 or P2 button 41 has been depressed. When the manual operation is performed, since the automatic feeding of the reel number is unnecessary, it is not carried out. If no manual operation is performed, by a means for detecting that a tape cassette is ejected and a tape cassette is inserted at the playback side, it is judged whether the cassette at the play side has been extracted or not. If the cassette is removed or extracted, a cassette-up-flag is made "1" and the fact that the cassette is removed is memorized. While, when the cassette is loaded, the edit point is decided and it is judged whether the edit point is inputted to the corresponding register or not by operating the ENTRY button 38, the P-IN button 37 or the P-OUT button 39. In this case, since if the editing data is not inputted, no undesirable data is inputted to the register for on-line work, the automatic feeding operation of the reel number is unnecessary and hence it is not performed. When it is detected that the editing data has already been inputted, it is judged whether or not the cassette-up-flag is already "1". When the cassette-up-flag is "1", it is judged that the playback cassette is replaced by another cassette and the present reel number at the register to which such edit point is registered is automatically incremented. In other words, when the cassette has been exchanged and the next edit point is entered by a different cassette, the reel number at the register is incremented and is then automatically memorized. On the contrary, when the cassette-up-flag is "0", since it is sufficient that the decision of the edit point on the same cassette as that on which the edit point deciding operation before has been performed is memorized, the automatic feeding of the reel number in the register is not necessary and hence no automatic feeding is carried out. In this case, when the reel number is automatically fed, the cassette-up-flag which is the memory whether or not the cassette has been exchanged is returned to "0" again. That is, when the power is turned ON, when the editing points as the edit number 1 are entered in the register $B_1$, the cassette-up-flag is "0", so that the reel number 001 is memorized. Next, when the cassette of the VTR 10 is ejected and replaced by a new cassette, the cassette-up-flag becomes "1" first and is then memorized. In this state, when the editing points as the edit number 2 are determined and then entered in the register $B_2$, the reel number is incremented in accordance with the above flow and the reel number 002 is memorized in the register $B_2$. As to the VTR 11, the above is similarly applied thereto, but the reel number is of course incremented as 102, 103, ...

With this system, the editor is free from the troublesome operation of having to input the reel number every time a cassette is exchanged, and hence the efficiency is improved. Moreover, mis-editing caused by forgetting to input a reel number can be avoided.

Although in the above embodiment, after a reel number has been manually entered even once, the automatic operation is not performed, a modification of this is possible whereby, even although the reel number has been manually inputted, when it is detected thereafter that the cassette is exchanged, the operation is changed to automatic operation if no manual input is effected. Moreover, it is not essential that the reel number is incremented by one.

**Claims**

1. An editing control system, comprising:
a record video tape recorder (9);
a plurality of play video tape recorders (10 to 19) each using a video tape cassette;
editing control means (1) for controlling said record and play video tape recorders (9 to 19), said editing control means (1) having a memory means ($B_1$ to $B_{128}$) for storing editing data including at least a reel number corresponding to said cassette and the edit points used for editing;
each of said play video tape recorders (10 to 19) having switch means for detecting insertion and ejection of a said cassette;
characterized by:
said editing data stored in said memory means ($B_1$ to $B_{128}$) also including flag data representing insertion and ejection of a said cassette;
means (2) for detecting an entry of said editing data;
means (5) for manually changing said reel number;
means (2) for detecting an absence of manual changing of said reel number; and
means (2, 4) for automatically changing said reel number in response to said flag data, a signal from said means (2) for detecting an entry of said editing data and a signal from said means (2) for detecting an absence of manual changing of said reel number.

2. An editing control system according to claim 1 wherein means (2, 4) for automatically changing said reel number increments said reel number.

3. An editing control system according to claim 1 further comprising means for automatically allocating different reel numbers to said plurality of play video tape recorders (10 to 19).

**Patentansprüche**

1. System zur Ediersteuerung
mit einem Aufzeichnungs-Videorekorder (9),
mit mehreren Wiedergabe-Videorekordern (10 bis 19), die jeweils eine Video-Bandkassette verwenden,
mit einer Ediersteuereinrichtung (1) zur Steuerung des Aufzeichnungs-Videorekorders und der Wiedergabe-Videorekorder (9 bis 19), wobei diese Ediersteuereinrichtung (1) eine Speichereinrichtung ($B_1$ bis $B_{128}$) zur Speicherung von Edierdaten aufweist, die wenigstens eine der genannten Kassette entsprechende Spulennummer und die für das Edieren verwendeten Edierpunkte umfassen,
wobei jeder der Wiedergabe-Videorekorder (10 bis 19) Schaltmittel zum Erfasen des Einsetzens und des Auswerfens einer Kassette aufweist, gekennzeichnet durch
Kennzeichnet-Daten, die das Einsetzen und das Auswerfen einer Kassette kennzeichnen, in den in der genannten Speicheinrichtung ($B_1$ bis $B_{128}$) gespeicherten Edierdaten, eine Einrichtung (2) zur Feststellung einer Eingabe der genannten Edierdaten,
eine Einrichtung (5) zur manuellen Änderung der Spulennummer,
eine Einrichtung (2), mit der festellbar ist, daß eine manuelle Änderung der Spulennummer nicht erfolgt ist, sowie eine Einrichtung (2, 4) zur automatischen Änderung der Spulennummer abhängig von diesen Kennzeichen-Daten, ein Signal der Einrichtung (2) zur Detektion einer Eingabe dieser Edierdaten und ein Signal der Einrichtung (2), mit der feststellbar ist, daß eine manuelle Änderung der Spulennummer nicht erfolgt ist.

2. System zur Ediersteuerung nach Anspruch 1, bei dem die Einrichtung (2, 4) zur automatischen Änderung der Spulennummer diese Spulennummer inkrementiert.

3. System zur Ediersteuerung nach Anspruch 1 ferner mit einer Einrichtung zur automatischen Zuteilung unterschiedlicher Spulennummern and die mehreren Wiedergabe-Videorekordern (10 bis 19).

**Revendications**

1. Système de commande d'édition, comprenant:
un enregistreur (9) à bande vidéo pour enregistrement;
une pluralité d'enregistreurs (10 à 19) à bande vidéo pour lecture, chacun utilisant une cassette à bande vidéo;

des moyens de commande d'édition (1), pour commander lesdits enregistreurs à bande vidéo pour enregistrement et pour lecture (9 à 19), lesdits moyens de commande d'édition (1) ayant un moyen de mémoire ($B_1$ à $B_{128}$) pour conserver des données d'édition incluant au moins un numéro de bobine correspondant à ladite cassette et aux points d'édition utilisés pour éditer;

chacun desdits enregistreurs à bande vidéo pour lecture (10 à 19) ayant des moyens de commutation pour détecter l'insertion et l'éjection d'une dite cassette;

caractérisé par:

le fait que lesdites données d'édition rangées dans ledit moyen de mémoire ($B_1$ à $B_{128}$) incluent aussi des données de drapeau représentant l'insertion et l'éjection d'une dite cassette;

des moyens (2) pour détecter une entrée desdites données d'édition;

des moyens (5) pour changer manuellement ledit numéro de bobine;

des moyens (2) pour détecter une absence de changement manuel dudit numéro de bobine; et

des moyens (2, 4) pour changer automatiquement ledit numéro de bobine en réponse auxdites données de drapeau, un signal provenant desdites moyens (2) pour détecter une entrée desdites données d'édition et un signal provenant desdits moyens (2) pour détecter une absence de changement manuel dudit numéro de bobine.

2. Système de commande d'édition selon revendication 1, dans lequel les moyens (2, 4) pour changer automatiquement ledit numéro de bobine incrémentent ledit numéro de bobine.

3. Système de commande d'édition selon revendication 1, comprenant en outre des moyens pour allouer automatiquement différents numéros de bobine à ladite pluralité d'enregistreurs à bande vidéo pour lecture (10 à 19).

# 0 077 686

FIG. 1

FIG. 2

*F I G. 3*

```
                    ┌──────────┐
                    │  Start   │                    F I G.  3
                    └──────────┘
                          │
                          ▼
                      ╱───────╲
                    ╱           ╲     MANUAL
                   ╱ Manual/Auto  ╲──────────────────────────────┐
                   ╲      ?       ╱                               │
                    ╲           ╱                                 │
                      ╲───────╱                                   │
                          │ AUTO                                  │
                          ▼                                       │
                      ╱───────╲                                   │
                    ╱  Whether  ╲    YES                          │
                   ╱ Or Not Cassette╲──────────┐                 │
                   ╲ At Play Is Extracted╱      │                 │
                    ╲      ?    ╱               │                 │
                      ╲───────╱                 ▼                 │
                          │ NO          ┌──────────────┐          │
                          ▼             │   Making     │          │
            NO        ╱───────╲         │ Cassette-Up  │          │
          ┌──────── ╱  Whether  ╲       │  -Flag "1"   │          │
          │        ╱ Or Not Edit Point╲ └──────────────┘          │
          │        ╲  Is Entried ?  ╱          │                  │
          │         ╲           ╱              │                  │
          │           ╲───────╱                │                  │
          │               │ YES                │                  │
          │               ▼                    │                  │
          │   NO      ╱───────╲                │                  │
          │ ◄─────── ╱  Whether  ╲             │                  │
          │         ╱ Or Not Cassette-╲        │                  │
          │         ╲ Up-Flag Is "1" ╱         │                  │
          │          ╲           ╱             │                  │
          │            ╲───────╱               │                  │
          │                │ YES               │                  │
          │                ▼                   │                  │
          │        ┌──────────────┐            │                  │
          │        │ Incrementing │            │                  │
          │        │ Reel  Number │            │                  │
          │        └──────────────┘            │                  │
          │                │                   │                  │
          │                ▼                   │                  │
          │        ┌──────────────┐            │                  │
          │        │  Returning   │            │                  │
          │        │ Cassette-Up- │            │                  │
          │        │  Flag To "0" │            │                  │
          │        └──────────────┘            │                  │
          │                │                   │                  │
          └────────────────┴───────────────────┴──────────────────┘
```